# EUROPÄISCHE PATENTSCHRIFT

(11) **EP 1 176 085 B1**
(45) Veröffentlichungstag und Bekanntmachung des Hinweises auf die Patenterteilung: **05.04.2006**
(21) Anmeldenummer: 01116991.9
(22) Anmeldetag: 12.07.2001
(51) Int. Cl.: B62D 49/08, B62D 49/06, B62D 49/02

(54) **Aufbewahrungsbehälter für Arbeitsfahrzeuge**
Storage case for working machines
Boîte de rangement pour machines de travail

(30) Priorität: 25.07.2000 DE 10036076
(43) Veröffentlichungstag der Anmeldung: 30.01.2002
(73) Patentinhaber: DEERE & COMPANY, Moline, Illinois 61265-8098 (US)
(72) Erfinder: Teich, Michael, 68199 Manheim (DE)
(74) Vertreter: Lau-Loskill, Philipp

(56) Entgegenhaltungen:
- DE-A- 2 443 809
- US-A- 4 138 152
- US-A- 5 033 662
- US-A- 6 027 139

## Beschreibung

Die Erfindung betrifft einen Aufbewahrungsbehälter mit Mitteln zur lösbaren Befestigung außen an einem Arbeitsfahrzeug, insbesondere an einem Traktor.

Ein gattungsgemäßer Aufbewahrungsbehälter ist beispiels - weise aus der US 4 138 152 bekannt.

Außen an Arbeitsfahrzeugen sind häufig Aufbewahrungsbehälter lösbar befestigt, die beispielsweise als Werkzeugkasten der Aufbewahrung von Werkzeugen dienen, um während des Einsatzes des Fahrzeugs ständig das für Umrüstungsarbeiten oder kleinere Reparaturen erforderliche Werkzeug bereitzuhaben. So ist beispielsweise an dem John Deere Serien-Traktor 6400 im Bereich der Trittstufen eine Aufnahme montiert, an der ein Werkzeugkasten befestigbar ist. Da diese seitlich angebrachten Aufbewahrungsbehälter innerhalb der äußeren Fahrzeugkontur liegen müssen und beengte räumliche Verhältnisse vorliegen, sind die bekannten Werkzeugkästen relativ klein und erlauben lediglich die Aufnahme des notwendigsten Werkzeugs. Viele Gegenstände, welche zweckmäßiger Weise bei längerer Abwesenheit von dem Standort des Fahrzeugs mitgeführt werden sollten, finden in dem Werkzeugkasten keinen Platz und müssen anderweitig untergebracht oder können nicht mitgeführt werden. Es handelt sich hierbei beispielsweise um Ketten, Anbaugeräte, Serviceteile, einen großen Hammer, Schutzkleidung und Gummistiefel. In der Landtechnik-Zeitschrift "profi" Nr. 7/00, Seite 4 ist eine behelfsmäßig mit einer Plane abgedeckte Unterbringungsmöglichkeit abgebildet, die den Mangel einer zu kleinen Original-Werkzeugkiste beheben soll.

Die der Erfindung zugrunde liegende Aufgabe wird darin gesehen, einen Aufbewahrungsbehälter für Arbeitsfahrzeuge anzugeben, der ausreichend groß ist, um den Wünschen der Praxis zu entsprechen und der sich trotz seiner Größe an einer gut zugänglichen Stelle am Fahrzeug befestigen lässt, ohne den Betrieb des Fahrzeuges zu stören.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der erfindungsgemäße Aufbewahrungsbehälter weist Mittel zur lösbaren Befestigung im äußeren Bereich eines Arbeitsfahrzeugs, insbesondere an einem Traktor, auf. Die Mittel enthalten wenigstens eine Lasche und wenigstens ein Abstützelement. Die Lasche steht von der im Wesentlichen senkrecht verlaufenden Behälterrückwand nach hinten vor und enthält wenigstens eine im Wesentlichen quer verlaufende Ausnehmung. Auch das Abstützelement steht von der Behälterrückwand nach hinten vor. Seine vorstehende Länge lässt sich einstellen.

Der erfindungsgemäße Aufbewahrungsbehälter eignet sich besonders zur Montage an einer Abschleppeinrichtung eines Arbeitsfahrzeugs. Die Abschleppeinrichtung ist vorgesehen, um an ihr im Notfall eine Abschleppstange oder ein Abschleppseil zu befestigen. Derartige Abschleppeinrichtungen sind durch die DIN 74056 beziehungsweise durch die europäischen Bestimmungen 79/533/EWG für Zugfahrzeuge vorgeschrieben. Die Abschleppeinrichtung ist fangmaulartig ausgebildet. Durch den mittleren Bereich des Fangmauls erstreckt sich eine im Wesentlichen senkrechte zylindrische Ausnehmung, in die ein Vorsteckbolzen einsteckbar ist. Derartige Abschleppeinrichtungen werden in der Regel im mittleren Bereich des vorderen Fahrzeugendes starr angebracht. Die Anbringung ist auch am hinteren Fahrzeugende möglich. Die Erfindung macht sich zu nutze, dass in diesen Bereichen ausreichend Platz für einen Aufbewahrungsbehälter zur Verfügung steht, so dass sich der Behälter unabhängig von räumlichen Begrenzungen der Fahrzeugkontur ausreichend groß ausbilden lässt.

Häufig sind an Ackerschleppern vorne Frontgewichte zur Ballastierung des Fahrzeugs befestigt. Auch diese Frontgewichte enthalten eine genormte Abschleppeinrichtung in Form einer vorderen Ausnehmung durch die sich eine vertikale zylindrische Ausnehmung erstreckt, die den Vorsteckbolzen aufnimmt.

Beispielsweise betrifft das deutsche Geschmacksmuster M 94 08 060, das am 25.06.96 veröffentlicht wurde, ein Frontgewicht für ein Arbeitsfahrzeug, welches eine derartige Abschleppvorrichtung enthält.

Der erfindungsgemäße Aufbewahrungsbehälter wird mittels einer oben beschriebenen Abschleppvorrichtung unmittelbar am Fahrzeug oder an einem Ballastgewicht befestigt, indem die Lasche in die fangmaulartige Ausnehmung der Abschleppvorrichtung geschoben wird, bis die senkrechte Ausnehmung der Abschleppvorrichtung mit der senkrechten Ausnehmung in der Lasche des Aufbewahrungsbehälters fluchtet. Dann wird der Vorsteckbolzen der Abschleppvorrichtung in die Ausnehmungen eingesteckt. Schließlich werden die Abstützelemente so weit eingeschraubt, bis sich ihre freien Enden an dem Fahrzeug oder an dem Ballastgewicht im Bereich der fangmaulartigen Ausnehmung abstützen und so den Aufbewahrungsbehälter gegenüber dem Fahrzeug oder dem Ballastgewicht verspannen. Der Kontakt zwischen Aufbewahrungsbehälter und Fahrzeug ist jetzt so innig, dass diese sich auch beim Fahrzeugbetrieb nicht gegeneinander bewegen und kein Klappern auftritt. Sollte es notwendig sein, die Abschleppvorrichtung zu verwenden, kann der Aufbewahrungsbehälter auf einfache Weise demontiert werden, in dem die Abstützelemente gelöst werden und der Vorsteckbolzen herausgenommen wird.

Da die Abschleppeinrichtungen genormt sind, lässt sich ein entsprechend angepasster Aufbewahrungsbehälter ohne weiteres an unterschiedlichen Fahrzeugen befestigen.

Im vorderen Fahrzeugbereich ist der Anbauraum nicht beengt, so dass der Aufbewahrungsbehälter relativ groß ausgebildet werden kann. Er ragt dabei über die Vorderkontur des Fahrzeugs bzw. die des Ballastgewichts hinaus und nimmt eine seitliche und höhenmäßige Ausdehnung ein, die an die Ausbildung der Fahrzeugfrontpartie angepasst ist. Es ist ohneweiteres möglich einen Aufbewahrungsbehälter mit beispielsweise 45 Litern Fassungsvermögen vorzusehen, der neben einem handelsüblichen, tragbaren Werkzeugkasten viele andere nützliche Gegenstände aufzunehmen vermag, wie Ketten, Anbaugeräte, Serviceteile, einen großen Hammer, Schutzkleidung und Gummistiefel. Der im vorderen oder hinteren Fahrzeugbereich montierte Aufbewahrungsbehälter ist von drei Seiten aus gut zugänglich.

Um den Anwendungsbereich des Aufbewahrungsbehälters zu vergrößern und eine Montage an unterschiedliche Anbaubedingungen zu ermöglichen, kann es zweckmäßig sein, in der von dem Aufbewahrungsbehälter abstehenden Lasche mehrere senkrechte Durchgangsbohrungen vorzusehen, die neben und/oder hintereinander angeordnet sind und in die wahlweise ein Befestigungsbolzen eingesteckt werden kann.

Die Lasche muss die Gewichtskraft des Aufbewahrungsbehälters einschließlich dessen Inhalt, sowie die Befestigungskräfte und dynamische Kräfte aufnehmen. Sie muss daher hinreichend stabil ausgebildet sein. Es ist von Vorteil die Lasche aus einem rechteckigen oder quadratischen Hohlprofil (Rohr) auszubilden, dessen eines Ende an der Hinterseite des Aufbewahrungsbehälters befestigt, beispielsweise angeschweißt, ist und dessen anderes Ende nach hinten von dem Aufbewahrungsbehälter absteht. Quer durch das Hohlprofil erstreckt sich senkrecht wenigstens eine vertikale Bohrung zur Aufnahme eines Befestigungsbolzens.

Zur Erhöhung der Behältersteifigkeit und zur Verbesserung der Einleitung der Kräfte ist an der rückseitigen Behälterwand eine vorzugsweise horizontal verlaufende Profilschiene befestigt (verschweißt). Die Profilschiene ist vorzugsweise als Hohlprofil (Rohr) mit einem rechteckigen oder quadratischen Querschnitt ausgebildet und trägt die Lasche und die Abstützelemente. Die Abmessungen des Hohlprofils sind an die räumlichen Bedingungen der fangmaulartigen Ausnehmung einer Abschleppeinrichtung angepasst.
Eine bevorzugte Ausbildung des Abstützelements, dessen Länge auf einfache Weise einstellbar ist, ist durch einen Schraubenbolzen gegeben, der sich in ein Gewinde einschrauben lässt, welches an der Behälterrückwand oder an der Profilschiene angebracht ist.

Vorzugsweise weist eine an der Behälterrückwand befestigte Profilschiene, ein Gewinde zur Aufnahme eines Schraubenbolzen auf. Durch eine zum Gehäuseinneren offene Ausnehmung, die mit dem Gewinde im Wesentlichen fluchtet und die das Durchführen eines auf den Schraubenkopf aufsetzbaren Werkzeugs erlaubt, lässt sich der Schraubenkopf beim Eindrehen in das Gewinde stecken.

Die Lasche ist zweckmäßiger Weise bezüglich der Quererstreckung des Behälters in dessen Mitte befestigt. Beiderseits und symmetrisch zur Lasche ist jeweils ein als Abstützelement dienender Schraubenbolzen angeordnet, der in ein Gewinde einschraubbar ist. Vorzugsweise sind die Lasche und die Schraubenbolzen bezüglich der Höhe der Behälterrückwand im oberen Drittel angeordnet. Hierdurch ergibt sich eine gute Stabilität und Übertragung der Gewichtskräfte zwischen Aufbewahrungsbehälter und Fahrzeug.

Der Aufbewahrungsbehälter ist zweckmäßiger Weise ein oben offener Behälter, dessen Öffnung durch einen Deckel verschließbar ist. Der Deckel ist an der Rückseite des Behälters, von der die Lasche und die Abstützelemente vorstehen, angelenkt.

Vorzugsweise ist der Aufbewahrungsbehälter im Wesentlichen quaderförmig ausgebildet. Dabei ist es aus ästhetischen Gründen von Vorteil die Behälterform und das Behälterdesign auf die Fahrzeugform abzustimmen, so dass sich beispielsweise die Rundungen und gegebenenfalls die Verjüngung der vorderen Fahrzeugkontur und/oder des Frontgewichts in der Formgebung des Aufbewahrungsbehälter fortsetzen. Es ist auch möglich einen Aufbewahrungsbehälter bereitzustellen, der an eine Traktorserie angepasst ist und sich wahlweise an unterschiedliche Traktoren der Serie befestigen lässt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Frontpartie eines Ackerschleppers mit einem an einem Ballastgewicht befestigten erfindungsgemäßen Aufbewahrungsbehälter,
- Fig. 2: die Querschnittsansicht eines an einem Ballastgewicht befestigten erfindungsgemäßen Aufbewahrungsbehälters und
- Fig. 3: einen Horizontalschnitt durch die Befestigungsmittel eines erfindungsgemäßen Aufbewahrungsbehälters.

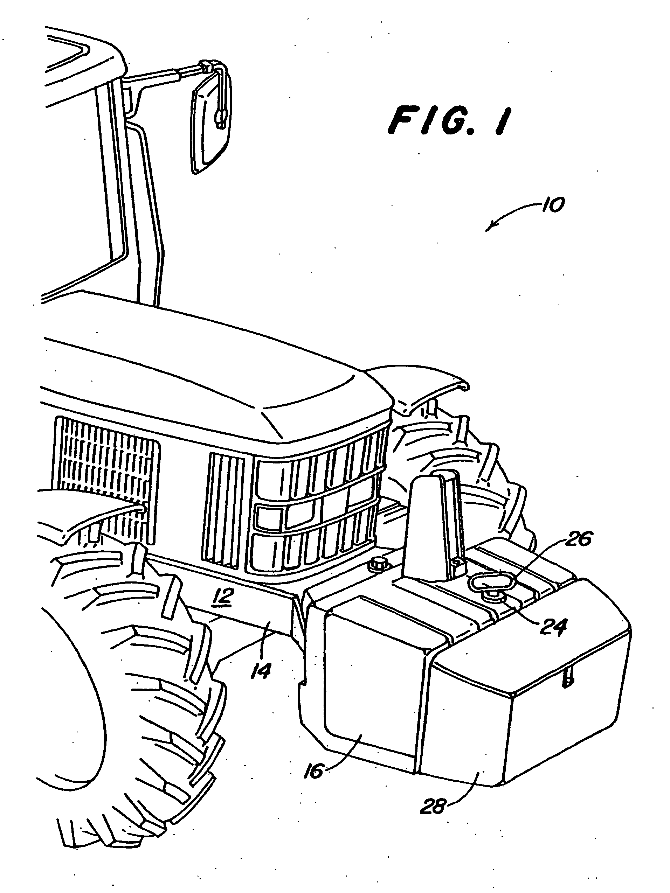

An dem in Fig. 1 teilweise dargestellten Ackerschlepper 10 ist im vorderen Bereich des Brückenrahmens 12 ein Tragelement 14 montiert, an dem ein Ballastgewicht 16 befestigt ist. Bei dem Ballastgewicht 16 handelt es sich beispielsweise um ein Gewicht, wie es durch das deutsche Geschmacksmuster M 94 08 060 geschützt ist. Seine Befestigung an dem Tragelement 14 erfolgt z. B. auf eine Weise, wie sie in der EP-A-0 756 987 beschrieben wurde. An Stelle des einteilig handhabbaren Ballastgewichtes 16 können auch übliche plattenförmige Ballastgewichte wie sie z. B. in der DE-PS-24 43 809 beschrieben wurden, verwendet werden.

Das Ballastgewicht 16 weist in seinem vorderen Bereich eine Abschleppeinrichtung auf, die der deutschen Norm DIN 74056 beziehungsweise der europäischen Bestimmung 79/533/EWG entspricht und die eine fangmaulartige Ausnehmung 18 sowie eine senkrecht verlaufende zylindrische Ausnehmung 20, 22 aufweist. In die zylindrische Ausnehmung 20, 22 ist ein Vorsteckbolzen 24 von oben eingesteckt, der an seinem oberen Ende einen Handhabungsring 26 aufweist.

An der Vorderseite des Ballastgewichtes 16 ist ein Aufbewahrungsbehälter 28 befestigt, der im Wesentlichen quaderförmig ausgebildet ist und in dem sich ein tragbarer Werkzeugkasten 29 mit Nürnberger Schere und Gummistiefel 31 befinden und der auch andere Gegenstände aufnehmen kann. Wie aus Fig. 1 hervorgeht, ist die äußere Kontur des Aufbewahrungsbehälters 28 einerseits hinsichtlich seiner seitlichen Abmessungen und seiner Höhe und andererseits hinsichtlich der Abrundungen seiner Kanten an die Kontur des Ballastgewichtes 16 angepasst, so dass ein einheitlicher Gesamteindruck entsteht. Der Aufbewahrungsbehälter 28 verjüngt sich etwas nach vorn.

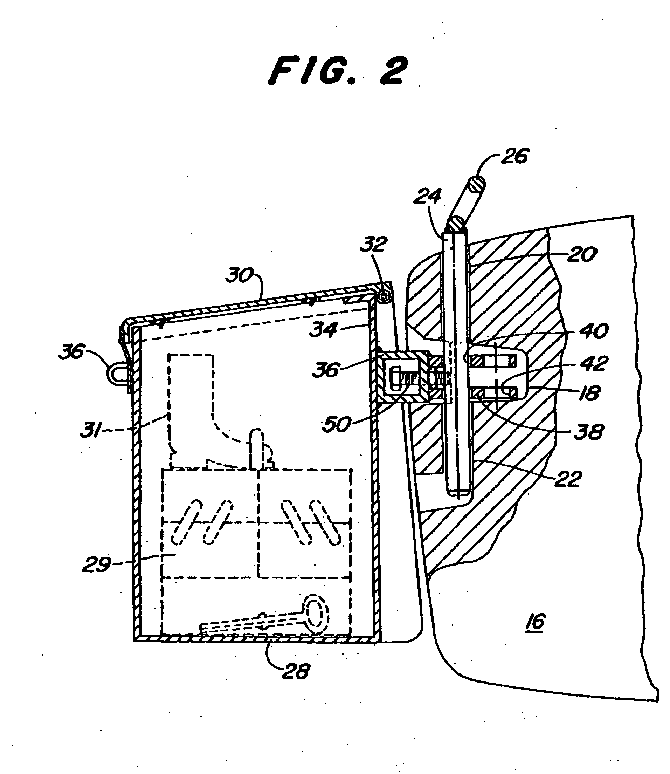

Der in Fig. 2 schematisch dargestellte Aufbewahrungsbehälter 28 hat oben eine Öffnung, die durch einen Deckel 30 verschließbar ist. Der Deckel 30 ist über ein Scharnier 32 im oberen Bereich der im Wesentlichen senkrecht ausgerichteten Behälterrückwand 34 angelenkt. Er lässt sich durch eine geeignete Vorrichtung 36 verschließen.

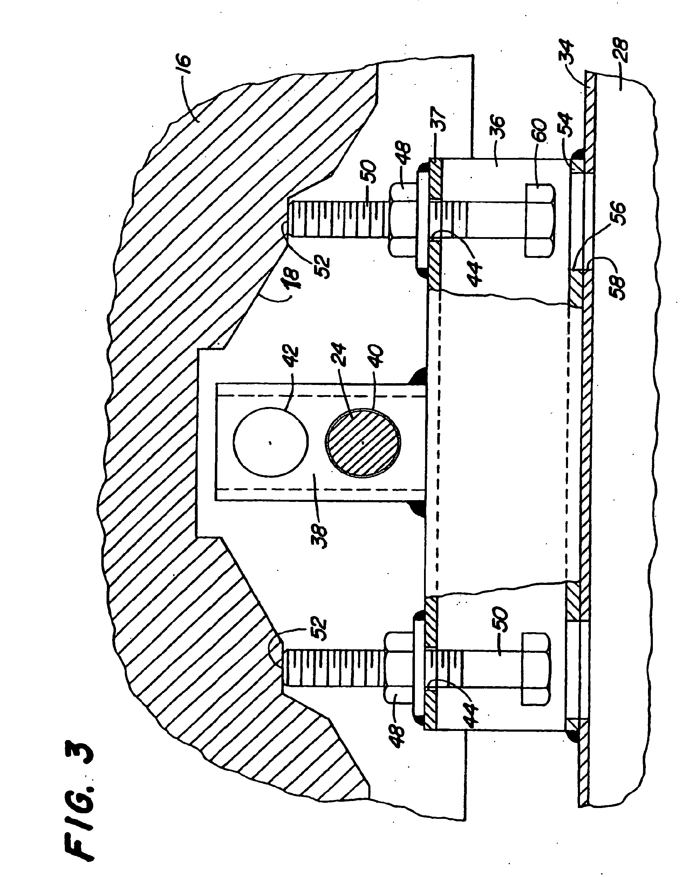

Im oberen Drittel der Behälterrückwand 34 ist eine horizontal verlaufende Profilschiene 36, die einen im Wesentlichen quadratischen Querschnitt hat, festgeschweißt. Wie aus Fig. 3 ersichtlich, ist die Länge der Profilschiene 36 an die fangmaulartige Ausnehmung 18 des Ballastgewichtes 16 angepasst.

An der nach hinten weisenden Seite 37 der Profilschiene 36 ist eine Lasche 38 festgeschweißt, die sich in die fangmaulartige Ausnehmung 18 erstreckt. Die Lasche 38 besteht aus einem rechteckigen Hohlprofil, welches in Richtung Ballastgewicht 16 nach hinten von der Profilschiene 36 absteht. Durch die Lasche 38, d. h. durch deren obere Profilseite und deren untere Profilseite, erstrecken sich zwei senkrecht verlaufende Bohrungen 40, 42. Eine der Bohrungen 40 nimmt den Vorsteckbolzen 24 auf, während die andere Bohrung 42 im dargestellten Ausführungsbeispiel nicht verwendet wird, sondern für andere Anbaubedingungen bereitgehalten wird.

Seitlich neben der Lasche 38 sind in die Hinterseite 37 der Profilschiene 36 zwei Bohrungen 44 eingelassen. Fluchtend zu den Bohrungen 44 sind an der Hinterseite 37 Flanschmuttern 48 festgeschweißt. In die Flanschmuttern 48 ist jeweils ein, als Abstützelement dienender, Schraubenbolzen 50 eingedreht, dessen freies Ende sich an einer Abstützfläche 52 in der fangmaulartigen Ausnehmung 18 abstützt. In der nach vorn weisenden, mit der Rückwand 34 des Aufbewahrungsbehälters 28 befestigten Seite 54 der Profilschiene 36 und in der genannten Rückwand 34 sind relativ große Bohrungen 56, 58 ausgebildet, durch die zur Montage die Schraubenbolzen 50 gesteckt werden können. Die Durchmesser der Bohrungen 56, 58 sind größer als der Umfangskreis eines an den Schraubenköpfen 60 angreifenden, nicht dargestellten Werkzeuges.

Zur Montage des Aufbewahrungsbehälters 28 an dem Ballastgewicht 16 wird der Aufbewahrungsbehälter 28 angehoben und seine Lasche 38 in die fangmaulartige Ausnehmung 18 des Ballastgewichtes 16 eingeführt. Dann wird der Vorsteckbolzen 24 in die Bohrungen 20, 40, 22 eingeführt. Schließlich werden die beiden Schraubenbolzen 50 gleichmäßig in die Flanschmuttern 48 eingedreht; bis ihre freien Enden an den Abstützflächen 52 anliegen. Durch Festziehen der Schraubenbolzen 50 wird der Aufbewahrungsbehälter 28 gegenüber dem Ballastgewicht 16 verspannt, so dass er sich relativ zum Ballastgewicht 16 nicht bewegen lässt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Aufbewahrungsbehälter mit Mitteln zur lösbaren Befestigung an einem Arbeitsfahrzeug (10), insbesondere an einem Traktor, wobei die Mittel wenigstens eine Lasche (38) aufweisen, die von der im Wesentlichen senkrecht verlaufenden Behälterrückwand (34) nach hinten absteht und die wenigstens eine im Wesentlichen quer verlaufende Ausnehmung (40, 42) enthält, **dadurch gekennzeichnet, dass** die Mittel wenigstens ein Abstützelement (50) aufweisen, das von der Behälterrückwand (34) nach hinten absteht und dessen vorstehende Länge einstellbar ist.

2. Aufbewahrungsbehälter nach Anspruch 1, **dadurch gekennzeichnet, dass** die Ausnehmung (40, 42) eine im Wesentlichen senkrecht verlaufende zylindrische Durchgangsöffnung zur Aufnahme eines Befestigungsbolzens (24) ist.

3. Aufbewahrungsbehälter nach Anspruch 1 oder 2, **dadurch gekennzeichnet, dass** die Lasche (38) als ein nach hinten ausgerichtetes rechteckiges oder quadratisches Hohlprofil ausgebildet ist, durch deren obere und untere Seitenteile miteinander fluchtende Bohrungen (40, 42) verlaufen.

4. Aufbewahrungsbehälter nach einem der Ansprüche 1 bis 3, **dadurch gekennzeichnet, dass** an der rückseitigen Behälterwand (34) eine vorzugsweise horizontal verlaufende Profilschiene (36) mit vorzugsweise einem rechteckigen oder quadratischen Hohlprofil befestigt ist, welche die Lasche (38) und das Abstützelement (50) trägt.

5. Aufbewahrungsbehälter nach einem der Ansprüche 1 bis 4, **dadurch gekennzeichnet, dass** das Abstützelement ein Schraubenbolzen (50) ist, der in ein Gewinde (48) der Behälterrückwand (34) oder der Profilschiene (36) einschraubbar ist.

6. Aufbewahrungsbehälter nach Anspruch 4 oder 5, **dadurch gekennzeichnet, dass** die an der Behälterrückwand (34) befestigte Profilschiene (36) ein Gewinde (48) zur Aufnahme eines Schraubenbolzens (50) aufweist und dass eine zum Gehäuseinneren offene Ausnehmung (56, 58) vorgesehen ist, die mit dem Gewinde (48) im Wesentlichen fluchtet und die ausreichend groß ist, um an den Schraubenkopf (60) ein Werkzeug anzusetzen, so dass sich der Schraubenkopf (60) zum Eindrehen in das Gewinde (48) durch die Ausnehmung (56, 58) stecken und mit dem Werkzeug verdrehen lässt.

7. Aufbewahrungsbehälter nach einem der Ansprüche 1 bis 6, **dadurch gekennzeichnet, dass** die Lasche (38) bezüglich der Quererstreckung des Behälters (28) in etwa in der Mitte der Behälterrückwand (34) befestigt ist und dass beiderseits der Lasche (38) in etwa symmetrisch jeweils ein als Schraubenbolzen (50) ausgebildetes Abstützelement in ein Gewinde (48) eindrehbar ist.

8. Aufbewahrungsbehälter nach einem der Ansprüche 1 bis 7, **dadurch gekennzeichnet, dass** die Lasche (38) und das wenigstens eine Abstützelement (50) bezüglich der Höhe der Behälterrückwand (34) im oberen Drittel angeordnet sind.

9. Aufbewahrungsbehälter nach einem der Ansprüche 1 bis 8, **gekennzeichnet durch** eine im Wesentlichen quaderförmig Behälterform.

10. Aufbewahrungsbehälter nach einem der Ansprüche 1 bis 9, **dadurch gekennzeichnet, dass** der Behälter (28) oben offen und durch einen an der Behälterrückwand (34) angelenkten Deckel (30) verschließbar ist.

11. Aufbewahrungsbehälter nach einem der Ansprüche 1 bis 10, **dadurch gekennzeichnet, dass** die Befestigungsmittel des Behälters (28) eine Montage an einer Abschleppeinrichtung des Arbeitsfahrzeugs (10) ermöglichen.

12. Aufbewahrungsbehälter nach einem der Ansprüche 1 bis 11, **gekennzeichnet durch** eine Formgebung und ein Design das auf das Arbeitsfahrzeug (10) abgestimmt ist.

13. Ballastgewicht für ein Arbeitsfahrzeug mit einer Abschleppeinrichtung und einem daran befestigten Aufbewahrungsbehälter nach einem der Ansprüche 1 bis 12.

14. Arbeitsfahrzeug, insbesondere Ackerschlepper, mit einer Abschleppeinrichtung und einem daran befestigten Aufbewahrungsbehälter nach einem der Ansprüche 1 bis 12.

## Claims

1. Storage container with means for detachable mounting on a utility vehicle (10), in particular on a tractor, the means having at least one bracket (38) which protrudes rearwardly from the substantially vertically extending container rear wall (34) and which contains at least one substantially transversely extending recess (40, 42), **characterised in that** the means have at least one support element (50) which protrudes rearwardly from the container rear wall (34) and the projecting length of which is adjustable.

2. Storage container according to claim 1, **characterised in that** the recess (40, 42) is a substantially vertically extending cylindrical through-opening for receiving a mounting bolt (24).

3. Storage container according to claim 1 or 2, **characterised in that** the bracket (38) is configured as a rearwardly orientated, rectangular or square hollow profile, through the upper and lower side parts of which borings (40, 42) which are aligned with each other extend.

4. Storage container according to one of the claims 1 to 3, **characterised in that**, on the rear-side container wall (34), a preferably horizontally extending profile rail (36) with preferably a rectangular or square hollow profile is mounted, which profile rail carries the bracket (38) and the support element (50).

5. Storage container according to one of the claims 1 to 4, **characterised in that** the support element is a screw bolt (50) which can be screwed into a thread (48) of the container rear wall (34) or of the profile rail (36).

6. Storage container according to claim 4 or 5, **characterised in that** the profile rail (36) which is mounted on the container rear wall (34) has a thread (48) for receiving a screw bolt (50 and **in that** a recess (56, 58) is provided which is open towards the housing interior, is substantially aligned with the thread (48) and is sufficiently large in order that a tool can be put on the screw head (60), so that the screw head (60) can be inserted through the recess (56, 58) in order to screw into the thread (48) and can be turned with the tool.

7. Storage container according to one of the claims 1 to 6, **characterised in that** the bracket (38) is mounted approximately in the centre of the container rear wall (34) relative to the transverse extension of the container (28) and **in that**, approximately symmetrically on both sides of the bracket (38), respectively one support element, which is configured as a screw bolt (50), can be screwed into a thread (48).

8. Storage container according to one of the claims 1 to 7, **characterised in that** the bracket (38) and the at least one support element (50) are disposed in the upper third relative to the height of the container rear wall (34).

9. Storage container according to one of the claims 1 to 8, **characterised by** a substantially cuboid container shape.

10. Storage container according to one of the claims 1 to 9, **characterised in that** the container (28) is open at the top and can be closed by means of a cover (30) which is articulated on the container rear wall (34).

11. Storage container according to one of the claims 1 to 10, **characterised in that** the mounting means of the container (28) make possible mounting on a towing device of the utility vehicle (10).

12. Storage container according to one of the claims 1 to 11, **characterised by** shaping and design which is coordinated to the utility vehicle (10).

13. Ballast weight for a utility vehicle with a towing device and a storage container mounted thereon, according to one of the claims 1 to 12.

14. Utility vehicle, in particular farming tractor, with a towing device and a storage container mounted thereon, according to one of the claims 1 to 12.

## Revendications

1. Caisson de rangement avec des moyens pour la fixation amovible sur un véhicule de travail (10), en particulier sur un tracteur, lesdits moyens comportant au moins une patte (38), qui forme saillie vers l'arrière de la paroi arrière (34) sensiblement verticale du caisson et qui contient au moins un évidement (40, 42), qui s'étend sensiblement dans le sens transversal, **caractérisé en ce que** les moyens comportent au moins un élément de support (50), qui forme saillie vers l'arrière de la paroi arrière (34) du caisson et dont la longueur en saillie est réglable.

2. Caisson de rangement selon la revendication 1, **caractérisé en ce que** l'évidement (40, 42) est un orifice de passage cylindrique, qui s'étend sensiblement dans le sens vertical et qui est destiné à recevoir un boulon de fixation (24).

3. Caisson de rangement selon la revendication 1 ou 2, **caractérisé en ce que** la patte (38) est conçue sous forme de profilé creux rectangulaire ou carré, qui est orienté vers l'arrière et dont les parties latérales supérieure et inférieure sont traversées par des forures (40, 42) alignées l'une avec l'autre.

4. Caisson de rangement selon l'une quelconque des revendications 1 à 3, **caractérisé en ce que** sur la paroi arrière (34) du caisson est fixé un rail profilé (36) avec de préférence un profil creux rectangulaire ou carré, qui s'étend de préférence dans le sens horizontal et qui porte la patte (38) et l'élément de support (50).

5. Caisson de rangement selon l'une quelconque des revendications 1 à 4, **caractérisé en ce que** l'élément de support est un boulon fileté (50) qui peut être vissé dans un taraudage (48) de la paroi arrière (34) du caisson ou du rail profilé (36).

6. Caisson de rangement selon la revendication 4 ou 5, **caractérisé en ce que** le rail profilé (36) fixé sur la paroi arrière (34) du caisson comporte un taraudage (48) destiné à recevoir un boulon fileté (50) et **en ce qu'**il est prévu un évidement (56, 58), qui est ouvert sur l'intérieur du caisson et qui est sensiblement aligné avec le taraudage (48) et est suffisamment grand pour qu'un outil entre en prise avec la tête du boulon (60), de telle sorte que, pour le vissage dans le taraudage (48), la tête du boulon (60) peut être enfichée à travers l'évidement (56, 58) et être entraînée en rotation par l'outil.

7. Caisson de rangement selon l'une quelconque des revendications 1 à 6, **caractérisé en ce que** la patte (38) est fixée, par rapport à la dimension transversale du caisson (28), à peu près au milieu de la paroi arrière (34) du caisson, et **en ce qu'**un élément de support conçu sous forme de boulon fileté (50), à peu près symétriquement, respectivement de part et d'autre de la patte (38), peut être vissé dans un taraudage (48).

8. Caisson de rangement selon l'une quelconque des revendications 1 à 7, **caractérisé en ce que** la patte (38) et ledit au moins un élément de support (50) sont agencés dans le tiers supérieur par rapport à la hauteur de la paroi arrière (34) du caisson.

9. Caisson de rangement selon l'une quelconque des revendications 1 à 8, **caractérisé par** une forme de caisson sensiblement parallélépipédique.

10. Caisson de rangement selon l'une quelconque des revendications 1 à 9, **caractérisé en ce que** le caisson (28) est ouvert sur le dessus et peut être fermé par un couvercle (30) articulé contre la paroi arrière (34) du caisson.

11. Caisson de rangement selon l'une quelconque des revendications 1 à 10, **caractérisé en ce que** les moyens de fixation du caisson (28) permettent un montage contre un dispositif d'attelage du véhicule de travail (10).

12. Caisson de rangement selon l'une quelconque des revendications 1 à 11, **caractérisé par** une configuration et un design adaptés au véhicule de travail (10).

13. Lest pour un véhicule de travail avec un dispositif d'attelage et un caisson de rangement selon l'une quelconque des revendications 1 à 12, fixé contre celui-ci.

14. Véhicule de travail, en particulier tracteur agricole, avec un dispositif d'attelage et un caisson de rangement selon l'une quelconque des revendications 1 à 12, fixé contre celui-ci.
